# EUROPÄISCHE PATENTANMELDUNG

(11) **EP 2 842 784 A1**
(43) Veröffentlichungstag der Anmeldung: **04.03.2015**
(21) Anmeldenummer: 13182104.3
(22) Anmeldetag: 28.08.2013
(51) Int. Cl.: B60K 15/077, B60K 15/03

(54) **Nutzfahrzeugtank**

(71) Anmelder: Magna Steyr Fuel Systems GesmbH, 8261 Sinabelkirchen (AT)
(72) Erfinder: Kahler, Bernd, 8020 Graz (AT); Schmid, Michael, 8020 Graz (AT)
(74) Vertreter: Rausch, Gabriele

(57) **Zusammenfassung**

Es wird ein Fahrzeugtank bestehend aus einem Behälter mit einem durchgehenden Volumen und mindestens zwei Schwallwänden die sich senkrecht zur Längsachse des Behälters erstrecken vorgeschlagen, wobei die Schwallwände mit den Wänden des Behälters einen Schwalltopf bilden, indem sie direkt dicht mit dem Behälter verbunden sind, und die Schwallwände mindestens eine Öffnung aufweisen, die oberhalb des gebildeten Schwalltopfes liegt und dass die Schwallwände innerhalb des Schwalltopfes Ventile aufweisen, die den Zufluss von Kraftstoff in den Schwalltopf erlauben.

## Beschreibung

Die Erfindung geht aus von einem Fahrzeugtank bestehend aus einem Behälter mit einem durchgehenden Volumen und mindestens zwei Schwallwänden die sich senkrecht zur Längsachse des Behälters erstrecken, wobei die Schwallwände mit den Wänden des Behälters einen Schwalltopf bilden, indem sie direkt dicht mit dem Behälter verbunden sind.

### Stand der Technik

Ist ein Tank nicht vollständig mit einer Flüssigkeit, beispielsweise Wasser, gefüllt und wird bewegt, so kann es in seinem Inneren zu Schwappbewegungen der Flüssigkeit gegen die Tankwand kommen. In ungünstigen Situationen wird bei diesen Schwappbewegungen auch eine gewisse Luftmenge eingeschlossen, was deutlich hörbare Schläge verursachen kann. Die genannten Geräusche können bei allen Arten bewegter flüssigkeitsgefüllter Tanks entstehen, so beispielsweise bei Kraftstoffbehältern von Kraftfahrzeugen. Das genannte Geräuschverhalten kann hierbei je nach zu tankendem Kraftstofftyp unterschiedlich stark ausgeprägt sein.

Kraftstoffbehälter werden beispielsweise aus zwei Blechschalen mit einer Oberschale und einer Unterschale hergestellt. In die Unterschale können weitere Komponenten wie beispielsweise ein Schwalltopf, sowie Labyrinthwände zur Herabsetzung der Strömungsgeschwindigkeit des Kraftstoffs im Ansaugbereich der Kraftstoffpumpe montiert werden. Anschließend werden Ober- und Unterschale miteinander verschweißt.

Ein Problem stellt die vollständige Entleerung des Kraftstofftanks dar. Aufgrund der großen Dimensionen der Kraftstofftanks für Nutzfahrzeuge bleiben erhebliche Mengen an Kraftstoff im Tank, die nicht mehr abgesaugt werden können oder in bestimmten Fahrsituationen nicht mehr abgesaugt werden können. Weiterhin ist es notwendig, für die Betankung eines Nutzfahrzeuges eine große Menge an Kraftstoff in den Kraftstofftank zu füllen, um ein zuverlässiges Starten des Motors zu gewährleisten. Dies gilt insbesondere im Fall der erstmaligen Betankung des Nutzfahrzeuges beim Hersteller.

Aus der WO 2008105725 ist eine Kraftstofftankanordnung für ein Fahrzeug bekannt, mit einem Kraftstofftank in einen Haupttank und einen Auffangtankraum, wobei der Haupttank und den Auffangtankraum durch wenigstens einen Trennwand voneinander getrennt sind. Um eine zuverlässige Kraftstoffzufuhr zum Verbrennungsmotor zu gewährleisten, existiert ein Ventilmechanismus innerhalb der Trennwand, der in Abhängigkeit von einem Füllzustand innerhalb des Haupttanks, in Reaktion auf Ansaugen von Brennstoff über die Brennstoffzuleitung geöffnet oder geschlossen wird.

Weiterhin ist aus der FR2679840 ein Kraftstofftank bekannt, in dem ein Einsatz vorgesehen ist, der je nach Straßenlage des Fahrzeugs befüllt wird. Die Ansaugleitung entnimmt Kraftstoff aus dem Einsatz für den Motor. Diese Lösung ermöglicht die Einführung von Kraftstoff in den unterschiedlichen Fahrsituationen löst aber das Problem der erstmaligen Betankung nicht.

Es ist daher Aufgabe der Erfindung einen Fahrzeugtank zur Verfügung zu stellen, der eine reduzierte Erstbetankungsmenge und eine optimierte Ansaugung von Kraftstoff bei reduzierter Restmenge im Tank erlaubt.

Die Aufgabe wird gelöst mit einem Fahrzeugtank bestehend aus einem Behälter mit einem durchgehenden Volumen und mindestens zwei Schwallwänden die sich senkrecht zur Längsachse des Behälters erstrecken, wobei die Schwallwände mit den Wänden des Behälters einen Schwalltopf bilden, indem sie direkt dicht mit dem Behälter verbunden sind, und wobei die Schwallwände mindestens eine Öffnung aufweisen, die oberhalb des gebildeten Schwalltopfes liegt und die Schwallwände innerhalb des Schwalltopfes Ventile aufweisen, die den Zufluss von Kraftstoff in den Schwalltopf erlauben.

Durch die vorgeschlagene Lösung ist eine Reduzierung der Erstbetankungsmenge beim Fahrzeughersteller möglich. Weiterhin wird durch die Reduzierung der nicht abgesaugten Restmenge im Fahrzeugtank eine Erhöhung der Reichweite pro Tankfüllung erzielt oder alternativ das Tankvolumen und somit die Reduktion des Fahrzeuggewichtes bei gleicher Reichweite erreicht.

Vorteilhafterweise ist der im Behälter gebildete Schwalltopf mittig im Behälter des Fahrzeugtanks gebildet.

Durch den mittigen Einbau des Schwalltopfes ist es möglich, beide Seiten des Fahrzeugtanks gleichmäßig zu entleeren.

Vorteilhafterweise ist die Ansaugleitung, die in den Schwalltopf reicht, nahe am Einfüllrohr angebracht. Durch die Positionierung der Ansaugleitung nahe am Einfüllrohr ist eine vorteilhafte Geometrie gegeben, mit der der Schwalltopf gefüllt und entleert werden kann.

Besonders vorteilhaft ist es, dass die Ansaugleitung am Einfüllrohr oder direkt an einer Schwallwand angebracht ist. Durch die bauliche Integration der beiden Komponenten ist eine deutliche Vereinfachung des Fahrzeugtanks zu erzielen.

Eine vorteilhafte Ausführungsform ist es, dass die die Ventile federbelastete Rückschlagventile sind.

Es ist dabei von Vorteil, dass die Rückschlagventile möglichst nahe am Behältergrund und Schwalltopfgrund angebracht sind. Durch diese Maßnahme ist es möglich die Restmenge des Kraftstoffes aufzusaugen.

### Beschreibung der Erfindung

Die Erfindung wird nachfolgend beispielhaft unter Bezugnahme auf die beigefügte Zeichnung beschrieben.

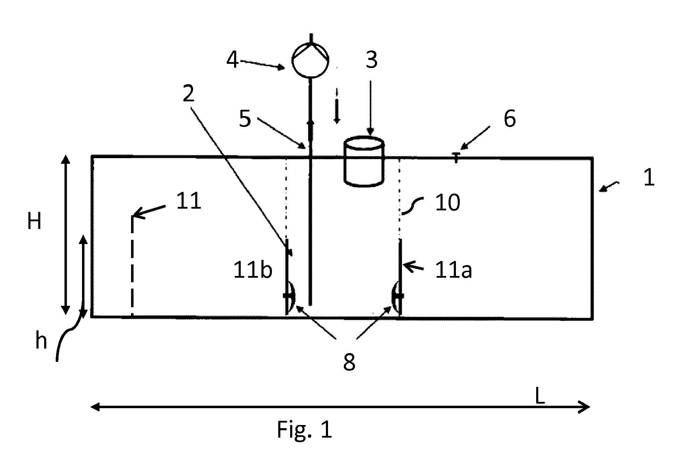

- Fig. 1: zeigt eine schematische Darstellung der beispielhaften Ausführungsform.

In Figur 1 ist schematisch ein Kraftfahrzeugtank 1 dargestellt. Ein solcher Tank, der in der Zeichnung als rechteckiger Querschnitt aufscheint, wird im allgemeinen als zylindrische Körper aufgebaut. Der Behälter besitzt eine Länge L sowie eine Höhe H. Die eigentliche Form des Behälters ist für die Erfindung nicht von Bedeutung. Ein solcher Kraftfahrzeugtank 1 weist Schwallwände 11 auf, wie sie beispielsweise links in der Zeichnung in einem Beispiel dargestellt sind und für die Reduktion von Schwappbewegungen im Tank dienen. Die erfindungsgemäße Lösung fordert zwei Schwallwände 11 a und 11b, die beanstandet von der geometrischen Mitte des Behälters eingebaut sind. Die beiden Schwallwände 11 erstrecken sich von der Unterseite des Behälters bis zur Oberseite und sind an ihrer Unterseite dicht mit dem Boden des Behälters verbunden und auch mit der Behälterwand dicht verbunden. Die Schwallwände 11a,b sind bis zu einer Höhe h undurchlässig und ohne Öffnung gestaltet. Oberhalb der Höhe h erstrecken sich die Schwallwände mit mehreren Öffnungen bis zur Oberseite des Behälters. Dicht an der Unterseite des Behälters sind Ventile 8 angeordnet. Diese Ventile sind als federbelastete Rückschlagventile aufgebaut, einen Variante benutzt Pilzventile. Die beiden Schwallwände 11 sowie der Behälter des Tanks 1 bilden einen Schwalltopf 2, der bis zur Höhe h ein Volumen V1 bildet, das zunächst unabhängig vom Füllstand des restlichen Behälters befüllt werden kann. Die Schwallwände 11a,b weisen im unteren Bereich bis zu einer Höhe h von ca. 250 mm keine Öffnungen auf, die den Schwalltopf zu dem restlichen Tankbehälter hin öffnen. Über ein Einfüllrohr 3 wird das Volumen V1 des Schwalltopfes befüllt. Eine Kraftstoffpumpe 4 greift über eine Ansaugleitung 5 auf den Kraftstoff des Volumens im Schwalltopfes zu. Eine Rücklaufleitung 7 endet ebenfalls im Volumen V1 des Schwalltopfes. Die Ansaugleitung reicht möglichst an die tiefste Stelle des Schwalltopfes hinein um eine möglichst komplette Entleerung zu gewährleisten.

Der Motor des Fahrzeugs wird über die Kraftstoffpumpe 4 mit Kraftstoff versorgt. Dieser Kraftstoff wird aus dem Schwalltopf 2 entnommen der mittig im Tank direkt unterhalb des Einfüllstutzens 3 angebracht ist. Während des Tankvorgangs, insbesondere bei der Erstbetankung im Herstellerwerk wird durch den Einfüllstutzen 3 und die Anordnung des Schwalltopfes mittig unter dem Einfüllstutzen zuerst der Schwalltopf 2 befüllt. Bei der weiteren Befüllung läuft der Kraftstoff durch die Öffnungen 10 der Schwallwand 11a,b in den restlichen Tankraum ungehindert hinein. Während des Betriebs des Nutzfahrzeuges wird Kraftstoff aus dem Schwalltopf abgesaugt und der Füllstand im Tank sinkt langsam ab. Wenn der Füllstand so weit gesunken ist, dass kein Überlaufen von Kraftstoff mehr vom restlichen Tankraum über die Öffnungen 10 in den Schwalltopf 2 hinein erfolgt, wird in weiterer Folge der Füllstand im Schwalltopf sinken. Ist der hydrostatische Druck im restlichen Tankraum, links und rechts vom Schwalltopf so gross, dass sich die Rückschlagventile im unteren Bereich der Schwallwände 11a,b öffnen, läuft Kraftstoff aus den restlichen Behälter in den Schwalltopf zu. Dabei öffnet sich bei einer Schräglage des Tanks auch nur das Rückschlagventil, das einen Druckunterschied zwischen Schwalltopf und Resttank sieht. Da die Ventile sich nur durch den festeingestellten Druckunterschied öffnen und nicht angesteuert werden müssen, ist das Verfahren stark gegenüber anderen aktiv gesteuerten Lösungen vereinfacht und dadurch robuster ausgelegt.

Dadurch ist ein Ausgleich der Füllstände zwischen den in diesem Beispiel beiden äußeren Kammern und dem Schwalltopf 2 möglich. Durch die erfindungsgemäße Anordnung kann für die Erstbetankung von Nutzfahrzeugen bis zu 80 % der bisher benötigten Füllmenge eingespart werden. Aktuell braucht ein Nutzfahrzeug bis zu 80 1 Kraftstoff, um überhaupt aus der Werkshalle zu fahren. Durch den erfindungsgemäßen Schwalltopf und die Anordnung im Tank ist es möglich diese Menge auf 20 % reduzieren. Zusätzlich wird die nicht absaugbare Restmenge welche im Betrieb im Tank verbleibt um ca. 50 % verringert, das sich die Rückschlagventile auch in Schräglage öffnen und ein Ausgleich der Flüssigkeitsniveaus vom Tank in den Schwalltopf stattfindet. Das hat zur Folge, dass entweder bei gleicher Füllmenge die Reichweite pro Tank Volumen deutlich erhöht wird, es geht um eine Fahrzeitverlängerung von ca. 1,5 Stunden, oder das Tankvolumen im gleichen Ausmaß verringert werden kann, was zu einer Reduktion des Gesamtgewichtes führt.

Zur weiteren Optimierung des Fahrzeugtanks werden in einer alternativen Lösung die Bauteile des Einfüllrohrs und der Ansaugleitung zu einem Bauteil integriert oder zumindest über eine gemeinsame Öffnung des Tanks installiert.

Eine weitere vorteilhafte Ausgestaltung ist durch die bauliche Integration des Einfüllstutzens 3 mit einer Schwallwand 11 gegeben. Auch die Integration der Ansaugleitung in eine Schwallwand ist denkbar.

Gerade bei der Herstellung des Tanks in Kunststoff durch Rotationssintern werden Schwallwände mit hergestellt. Dabei ist es auf einfache Art möglich, entlang der Schwallwände Leitungen vorzusehen, die als Ansaugleitung oder als Einfüllrohr dienen.

Für das Material des erfindungsgemäßen Fahrzeugtanks kommt Metall oder Kunststoff infrage. Auch Kombinationen der beiden Materialien sind denkbar. Die Herstellung des Tanks erfolgt dabei einstückig oder in mehreren Teilen.

### Bezugszeichenliste

- 1: Tank
- 2: Schwalltopf
- 3: Einfüllrohr
- 4: Kraftstoffpumpe
- 5: Ansaugleitung
- 6: Rov
- 7: Rücklaufleitung
- 8: Ventil
- 10: Öffnungen
- 11: Schwallwand

## Patentansprüche

1. Fahrzeugtank (1) bestehend aus einem Behälter mit einem durchgehenden Volumen und mindestens zwei Schwallwänden (11) die sich senkrecht zur Längsachse (L) des Behälters erstrecken, wobei die Schwallwände mit den Wänden des Behälters einen Schwalltopf bilden, indem sie direkt dicht mit dem Behälter verbunden sind, **dadurch gekennzeichnet, dass** die Schwallwände (11) mindestens eine Öffnung (10) aufweisen, die oberhalb des gebildeten Schwalltopfes liegt und dass die Schwallwände innerhalb des Schwalltopfes Ventile (8) aufweisen, die den Zufluss von Kraftstoff in den Schwalltopf erlauben.

2. Fahrzeugtank nach Anspruch 1, **dadurch gekennzeichnet, dass** der im Behälter gebildete Schwalltopf (2) mittig im Behälter des Fahrzeugtanks gebildet ist.

3. Fahrzeugtank nach Anspruch 1, **dadurch gekennzeichnet, dass** die Ansaugleitung(5) in den Schwalltopf reicht und nahe am Einfüllrohr (3) angebracht ist.

4. Fahrzeugtank nach Anspruch 1, **dadurch gekennzeichnet, dass** die Ansaugleitung am Einfüllrohr angebracht ist.

5. Fahrzeugtank nach Anspruch 1, **dadurch gekennzeichnet, dass** das Einfüllrohr (3) direkt an einer Schwallwand angebracht ist.

6. Fahrzeugtank nach Anspruch 1, **dadurch gekennzeichnet, dass** die Ventile (8) Rückschlagventile sind.

7. Fahrzeugtank nach Anspruch 1, **dadurch gekennzeichnet, dass** die Rückschlagventile möglichst nahe am Behältergrund und Schwalltopfgrund angebracht sind.
